# EUROPÄISCHE PATENTSCHRIFT

(11) **EP 3 488 096 B1**
(45) Veröffentlichungstag und Bekanntmachung des Hinweises auf die Patenterteilung: **13.05.2020**
(21) Anmeldenummer: 17734023.9
(22) Anmeldetag: 21.06.2017
(51) Int. Cl.: F02M 37/00, F02D 41/38, F02D 41/00, F02M 21/02, F02M 63/02, F02M 63/00

(54) **KRAFTSTOFFFÖRDEREINRICHTUNG FÜR EINE BRENNKRAFTMASCHINE, SOWIE EIN VERFAHREN ZUR FÖRDERUNG VON KRAFTSTOFF IN EINER KRAFTSTOFFFÖRDEREINRICHTUNG**
FUEL-PUMPING DEVICE FOR AN INTERNAL COMBUSTION ENGINE, AND METHOD FOR PUMPING FUEL IN A FUEL-PUMPING DEVICE
DISPOSITIF DE TRANSPORT DE CARBURANT POUR UN MOTEUR À COMBUSTION INTERNE AINSI QUE PROCÉDÉ POUR LE TRANSPORT DE CARBURANT DANS UN DISPOSITIF DE TRANSPORT DE CARBURANT

(30) Priorität: 25.07.2016 DE 102016213595
(43) Veröffentlichungstag der Anmeldung: 29.05.2019
(73) Patentinhaber: Robert Bosch GmbH, 70442 Stuttgart (DE)
(72) Erfinder: BERNHAUPT, Martin, 5411 Oberalm (AT)
(86) Internationale Anmeldenummer: PCT/EP2017/065170
(87) Internationale Veröffentlichungsnummer: WO 2018/019479

(56) Entgegenhaltungen:
- DE-A1-102008 051 931
- DE-A1-102010 061 183
- US-A- 5 890 459

## Beschreibung

### Stand der Technik

Die Erfindung betrifft eine Kraftstofffördereinrichtung für eine Kraftstoffeinspritzeinrichtung einer Brennkraftmaschine und ein Verfahren zur Förderung von Kraftstoff in einer Kraftstofffördereinrichtung.

Eine Kraftstofffördereinrichtung ist durch die DE 10 2012 200 706 A1 bekannt. Diese Kraftstofffördereinrichtung weist eine Förderpumpe auf, durch die Kraftstoff zur Saugseite einer Hochdruckpumpe gefördert wird. Durch die Hochdruckpumpe wird Kraftstoff in einen Hochdruckbereich gefördert, aus dem zumindest mittelbar wenigstens ein Injektor der Kraftstoffeinspritzeinrichtung mit Kraftstoff versorgt wird. Zwischen der Förderpumpe und der Saugseite der Hochdruckpumpe führt eine Bypassverbindung zu einem Niederdruckbereich ab.

Eine Kraftstofffördereinrichtung für einen Dual-Fuel Motor ist auch aus DE 10 2010 061183 A1 bekannt.

### Offenbarung der Erfindung

### Vorteile der Erfindung

Die erfindungsgemäße Kraftstofffördereinrichtung mit den Merkmalen gemäß der unabhängigen Ansprüche hat den Vorteil, dass durch das Absteuern der gesamten Fördermenge der großen Hochdruckpumpe oder der kleinen Hochdruckpumpe über eine Abströmleitung in den Niederdruckbereich eine besonders gute Anpassung an den jeweiligen Kraftstoffbedarf abhängig von der Betriebsart eines Dual-Fuel-Motors ermöglicht wird.

Bei einem Dual-Fuel-Motor wird im Betrieb mit gasförmigen Kraftstoff (Gasbetrieb) nur eine kleine Menge flüssiger Kraftstoff benötigt, um die Zündung zu realisieren.

Beim Betrieb des Dual-Fuel-Motors mit flüssigen Kraftstoff (Flüssigkraftstoffbetrieb) wird dagegen eine große Menge an flüssigen Kraftstoff benötigt, welche durch die Kraftstofffördereinrichtung transportiert werden muss.

Die erfindungsgemäße Kraftstofffördereinrichtung ermöglicht die Förderung von sehr kleinen Mengen an flüssigen Kraftstoff für den Gasbetrieb des Dual-Fuel-Motors und die Förderung von sehr großen Mengen an Kraftstoff für den Flüssigkraftstoffbetrieb. Hierbei können die kleinen Mengen an flüssigen Kraftstoff im Gasbetrieb nur 0,5% bis 5% der Menge an Kraftstoff beim Flüssigkraftstoffbetrieb betragen.

Durch den Einsatz einer großen Hochdruckpumpe und einer kleinen Hochdruckpumpe, die parallel zueinander geschaltet sind, wobei die große Hochdruckpumpe beim Gasbetrieb in den Niederdruckbereich fördert, kann eine Überhitzung der Hochdruckpumpe aufgrund eines zu geringen Kraftstoffdurchsatzes vermieden werden. Des Weiteren können Kavitationsprobleme an Ventilen aufgrund einer zu geringen Kraftstoffmenge oder Druckregelprobleme aufgrund einer sehr geringen Auslastung der großen Hochdruckpumpe vermieden werden.

In den abhängigen Ansprüchen sind vorteilhafte Ausgestaltungen und Weiterbildungen der erfindungsgemäßen Kraftstofffördereinrichtung angegeben.

Es ist von Vorteil, das die maximale Fördermenge der großen Hochdruckpumpe um mindestens das Doppelte, vorzugsweise das 10-fache größer ist, als die maximale Fördermenge der kleinen Hochdruckpumpe, da damit die benötigte Kraftstoffmenge abhängig von der jeweiligen Betriebsform abgedeckt werden können.

Es ist vorteilhaft, das die Kontrolleinrichtung ein Ventil, insbesondere ein 4/2-Wegeventil, ist, welches zwei Positionen aufweist, so dass in einer ersten Position eine Verbindung zwischen einer Druckseite der großen Hochdruckpumpe und dem Hochdruckbereich und eine Verbindung zwischen einer Druckseite der kleinen Hochdruckpumpe und der Abströmleitung freigegeben ist, und in einer zweiten Position eine Verbindung zwischen einer Druckseite der kleinen Hochdruckpumpe und dem Hochdruckbereich und eine Verbindung zwischen der Druckseite der großen Hochdruckpumpe und der Abströmleitung freigegeben ist.

Die Druckseite der große Hochdruckpumpe kann über die Kontrolleinrichtung entweder mit der Abströmleitung oder dem Hochdruckbereich verbunden werden. Auf diese Weise ist im Gasbetrieb, wenn die Hochdruckpumpe mit der Abströmleitung verbunden ist, eine Nullförderung der großen Hochdruckpumpe in den Niederdruckbereich möglich, so dass die große Hochdruckpumpe weiterhin mit frischem Kraftstoff durchspült wird und Probleme aufgrund einer zu geringen Fördermenge vermieden werden. Der Förderdruck der großen Hochdruckpumpe wird bei einer Verbindung mit der Abströmleitung (Nullförderung) auf das Druckniveau im Niederdruckbereich abgesenkt, sodass sich auch die Antriebsleistung der großen Hochdruckpumpe reduziert und Energie eingespart werden kann.

Um einen komplexen Aufbau der Kraftstofffördereinrichtung zu vermeiden ist es von Vorteil, wenn die kleine Hochdruckpumpe über eine Zündleitung immer mit dem Hochdruckbereich verbunden ist.

In einer nicht zur Erfindung gehörenden Variante ist von Vorteil, wenn die Kontrolleinrichtung ein Ventil, insbesondere ein 3/2 Wegeventil ist, welches zwei Positionen aufweist, so dass in einer ersten Position eine Verbindung zwischen der Druckseite der großen Hochdruckpumpe und dem Hochdruckbereich freigegeben ist, und in einer zweiten Position eine Verbindung zwischen der Druckseite der großen Hochdruckpumpe und der Abströmleitung freigegeben ist, da diese beiden alternativen Zustände durch ein einziges Bauteil realisiert werden können.

Ein Spülventil, welches in der Abströmleitung angeordnet ist, ist aufgrund der geringen Komplexität als Kontrolleinrichtung vorteilhaft, wobei die Abströmleitung zwischen einem Rückschlagventil und der großen Hochdruckpumpe in einer Hochdruckverbindung angeordnet ist

Die kleine Hochdruckpumpe kann auf vorteilhafte Weise mechanisch an die große Hochdruckpumpe gekoppelt sein und über diese angetrieben werden, um zusätzliche mechanische Schnittstellen einzusparen.

### Ausführungsbeispiele

Bevorzugte Ausführungsbeispiele der Erfindung sind in der Zeichnung dargestellt und in der nachfolgenden Beschreibung näher erläutert.

Es zeigen:
Figur 1 eine Kraftstofffördereinrichtung einer Brennkraftmaschine in schematischer Darstellung gemäß einem ersten Ausführungsbeispiel,
Figur 2 eine Kraftstofffördereinrichtung einer Brennkraftmaschine in schematischer Darstellung gemäß einer nicht zur Erfindung gehörenden Variante, und
Figur 3 eine Kraftstofffördereinrichtung einer Brennkraftmaschine in schematischer Darstellung einer nicht zur Erfindung gehörenden Variante.

### Ausführungsformen der Erfindung

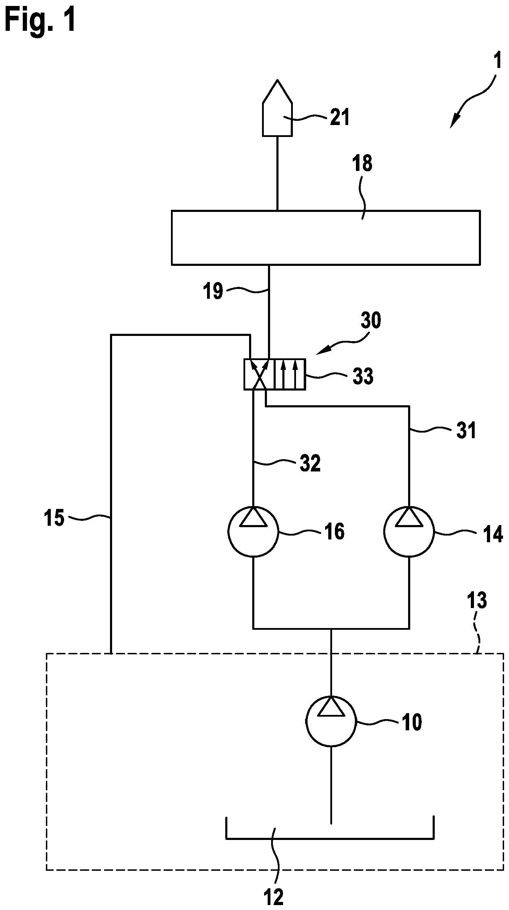

In der Figur 1 ist eine Kraftstoffeinspritzeinrichtung einer Brennkraftmaschine dargestellt, die eine Kraftstofffördereinrichtung 1 aufweist. Die Kraftstofffördereinrichtung 1 weist mindestens eine große Hochdruckpumpe 16 und eine kleine Hochdruckpumpe 14 auf, welche parallel zueinander angeordnet sind. Durch die mindestens eine große Hochdruckpumpe 16 und die kleine Hochdruckpump 14 kann Kraftstoff in einen Hochdruckbereich 18 der Kraftstoffeinspritzeinrichtung gefördert werden.

Der Hochdruckbereich 18 umfasst beispielsweise einen Hochdruckspeicher. Aus dem Hochdruckbereich 18 werden ein oder mehrere Injektoren 21 mit Kraftstoff versorgt, wobei jedem Zylinder der Brennkraftmaschine mindestens ein Injektor 21 zugeordnet ist.

Es ist eine Kontrolleinrichtung 30 in der Kraftstofffördereinrichtung 1 angeordnet, welche die gesamte Fördermenge der großen Hochdruckpumpe 16 oder die gesamte Fördermenge der kleinen Hochdruckpumpe 14 über eine Abströmleitung 15 in den Niederdruckbereich 13 absteuern kann.

Der Niederdruckbereich 13 umfasst mindestens eine Förderpumpe 10, welche Kraftstoff aus einem Vorratsbehälter 12 zur Saugseite der großen Hochdruckpumpe 16 und zur Saugseite der kleine Hochdruckpumpe 14 fördert. Es können noch weitere Leitungen, Ventile und Filter im Niederdruckbereich 13 angeordnet sein. Da die Anordnung der Elemente im Niederdruckbereich 13 beliebig sein kann, wird im Folgenden auf diesen Bereich nur als Niederdruckbereich 13 eingegangen.

Die Kraftstofffördereinrichtung fördert abhängig von der jeweiligen Betriebsform eines Dual-Fuel-Motors unterschiedliche Mengen an Kraftstoff in den Hochdruckbereich 18. Wird der Dual-Fuel-Motor mit flüssigen Kraftsoff betrieben (Flüssigkraftstoffbetrieb), so muss durch die Kraftstofffördereinrichtung 1 eine große Menge an flüssigen Kraftstoff in den Hochdruckbereich 18 und zum Injektor 21 gefördert werden. Dies wird durch den Betrieb der großen Hochdruckpumpe 16, welche ein größeres maximales Fördervolumen als die kleine Hochdruckpumpe 14 hat, ermöglicht.

Befindet sich die Kraftstofffördereinrichtung 1 im Flüssigkraftstoffbetrieb, so wird die Kontrolleinrichtung 30 so angesteuert, dass die gesamte Fördermenge der großen Hochdruckpumpe 16 in den Hochdruckbereich 18 gefördert wird, während die gesamte Fördermenge der kleinen Hochdruckpumpe 14 entweder über die Abströmleitung 15 abgesteuert wird oder zusätzlich in den Hochdruckbereich 18 gefördert wird.

Wird der Dual-Fuel-Motor mit gasförmigen Kraftsoff betrieben (Gasbetrieb), so muss nur eine kleine Menge an flüssigen Kraftstoff zur Zündung des gasförmigen Kraftstoffes durch die Kraftstofffördereinrichtung 1 in den Hochdruckbereich 18 und zum Injektor 21 gefördert werden. Diese kleine Menge an Kraftsoff kann allein durch die kleine Hochdruckpumpe 14 zum Injektor 21 gefördert werden.

Befindet sich die Kraftstofffördereinrichtung 1 im Gasbetrieb, so wird die Kontrolleinrichtung 30 so angesteuert, dass die gesamte Fördermenge der großen Hochdruckpumpe 16 über die Abströmleitung 15 in den Niederdruckbereich 30 abgesteuert wird, während die die gesamte Fördermenge der kleinen Hochdruckpumpe 14 in den Hochdruckbereich 18 gefördert wird.

Die maximale Fördermenge der großen Hochdruckpumpe 16 ist um mindestens das Doppelte, vorzugsweise das 10-fache größer, als die maximale Fördermenge der kleinen Hochdruckpumpe 14. In einer weiteren Ausführungsform ist die maximale Fördermenge der großen Hochdruckpumpe 16 ist um mindestens das 20-fache größer als die maximale Fördermenge der kleinen Hochdruckpumpe 14.

Oben genannte Anordnungen und Erläuterungen sind für alle folgenden Ausführungsbeispiele gültig.

Gemäß einem ersten Ausführungsbeispiel ist die Kontrolleinrichtung 30 ein erstes Wegeventil 33, insbesondere ein 4/2-Wegeventil 33, welches zwei Positionen aufweist und eine Zündleitung 31, die mit der Saugseite der kleinen Hochdruckpumpe 14 verbunden ist und eine Pumpenleitung 32, die mit der Saugseite der großen Hochdruckpumpe 16 verbunden ist, mit der Abströmleitung 15 und einer Hochdruckleitung 19, die in den Hochdruckbereich 18 mündet, verbindet.

In einer ersten Position des ersten Wegeventils 33 ist eine Verbindung zwischen einer Druckseite der großen Hochdruckpumpe 16 und dem Hochdruckbereich 18 und eine Verbindung zwischen einer Druckseite der kleinen Hochdruckpumpe 14 und der Abströmleitung 15 freigegeben. In der ersten Position des ersten Wegeventils 33 sind die Zündleitung 31 und die Abströmleitung 15 miteinander verbunden, sowie die Pumpenleitung 32 und die Hochdruckleitung 19 miteinander verbunden.

In einer zweiten Position des ersten Wegeventils 33 ist eine Verbindung zwischen der Druckseite der kleinen Hochdruckpumpe 14 und dem Hochdruckbereich 18 und eine Verbindung zwischen der Druckseite der großen Hochdruckpumpe 16 und der Abströmleitung 15 freigegeben. In der zweiten Position des ersten Wegeventils 33 sind die Zündleitung 31 und die Hochdruckleitung 19 miteinander verbunden, sowie die Pumpenleitung 32 und die Abströmleitung 15 miteinander verbunden.

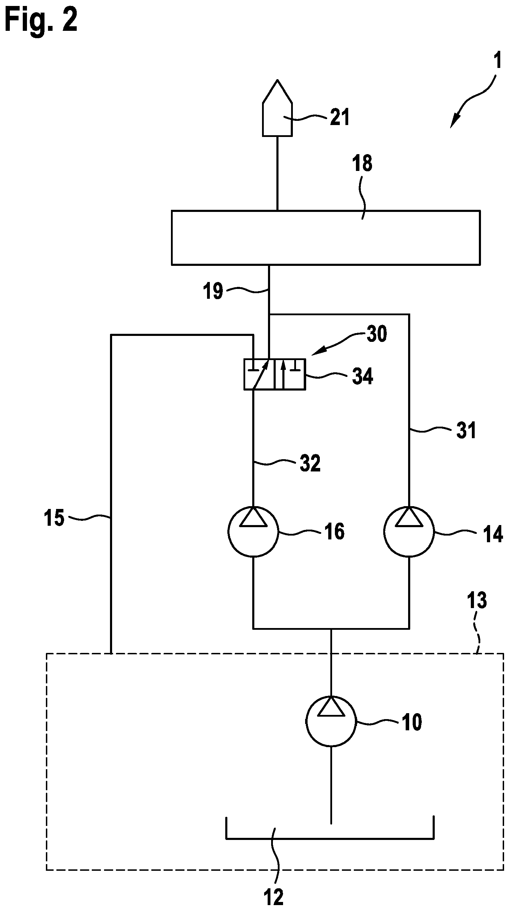

In Figur 2 ist eine zweite, nicht zur Erfindung gehörenden, Variante gezeigt. Die Kontrolleinrichtung 30 ist ein zweites Wegeventil 34, insbesondere ein 3/2-Wegeventil 34, welches zwei Positionen aufweist und die Pumpenleitung 32, die mit der Saugseite der großen Hochdruckpumpe 16 verbunden ist, entweder mit der Abströmleitung 15 oder der Hochdruckleitung 19, die in den Hochdruckbereich 18 mündet, verbindet.

In einer ersten Position des zweiten Wegeventils 34 ist eine Verbindung zwischen der Druckseite der großen Hochdruckpumpe 16 und dem Hochdruckbereich 18 freigegeben, und in einer zweiten Position des zweiten Wegeventils 34 ist eine Verbindung zwischen der Druckseite der großen Hochdruckpumpe 16 und der Abströmleitung 15 freigegeben.

In der ersten Position des zweiten Wegeventils 34 ist die Pumpenleitung 32 und die Hochdruckleitung 19 miteinander verbunden, und in der zweiten Position des zweiten Wegeventils 34 ist die Pumpenleitung 32 und die Abströmleitung 15 miteinander verbunden.

Die Druckseite der kleinen Hochdruckpumpe 14 ist immer mit dem Hochdruckbereich 18 verbunden. Eine Zündleitung 31 verbindet die kleine Hochdruckpumpe 14 mit der Hochdruckleitung 19, welche im Hochdruckbereich 18 mündet.

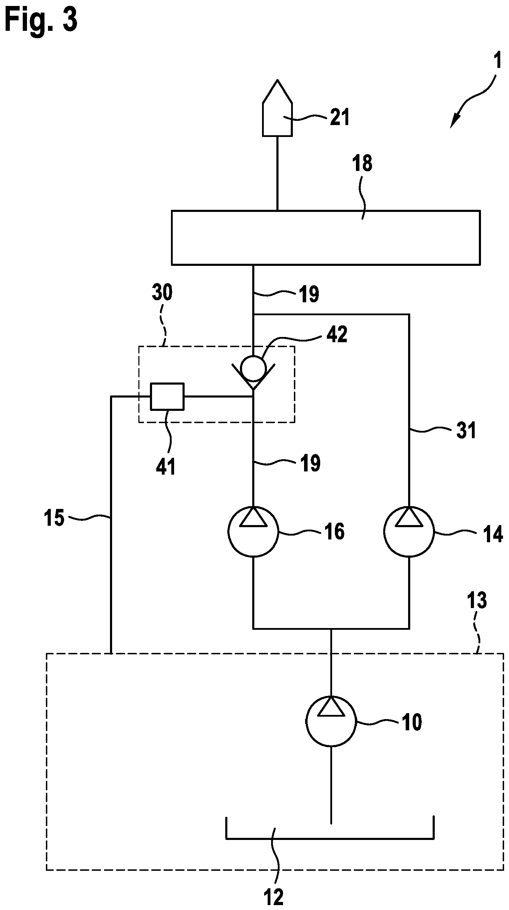

In Figur 3 ist eine dritte, nicht zur Erfindung gehörenden, Variante gezeigt. Die Kontrolleinrichtung 30 weist ein Spülventil 41 auf, welches in der Abströmleitung 15 angeordnet ist. Das Spülventil 41 kann pneumatisch, elektrisch und hydraulisch angesteuert werden und durch eine nicht näher dargestellt Steuereinrichtung geöffnet oder geschlossen werden. Die Abströmleitung 15 zweigt von einer Hochdruckverbindung 19, welche die große Hochdruckpumpe 16 mit dem Hochdruckbereich 18 verbindet, ab und ist zwischen einem Rückschlagventil 42 und der großen Hochdruckpumpe 16 angeordnet.

Das Rückschlagventil 42 öffnet die Verbindung zwischen der Druckseite der großen Hochdruckpumpe 16 und dem Hochdruckbereich 18, wenn ein vorgegebener Öffnungsdruck auf der der großen Hochdruckpumpe 16 zugewandten Seite überschritten wird. Dieser Öffnungsdruck kann durch die große Hochdruckpumpe 16 bereits bei niedrigen Fördermengen aufgebaut werden, wenn das Spülventil 41 geschlossen ist. Eine Rückströmung von Kraftstoff aus dem Hochdruckbereich 18 in Richtung der großen Hochdruckpumpe 16 ist durch das Rückschlagventil 42 nicht möglich.

Ist das Spülventil 41 geschlossen, so wird durch die große Hochdruckpumpe 16 Kraftstoff über das Rückschlagventil 42 in den Hochdruckbereich 18 gefördert. Ist das Spülventil 41 geöffnet, so fließt die gesamte Fördermenge der großen Hochdruckpumpe 16 über die Abströmleitung 15 in den Niederdruckbereich 13. Der Druck vor dem Rückschlagventil 42 bricht ein sobald die große Hochdruckpumpe 16 in den Niederdruckbereich 13 fördert, so dass das Rückschlagventil 42 schließt.

Die Druckseite der kleinen Hochdruckpumpe 14 ist immer mit dem Hochdruckbereich 18 verbunden. Eine Zündleitung 31 verbindet die kleine Hochdruckpumpe 14 mit der Hochdruckleitung 19 in einem Bereich stromaufwärts des Rückschlagventils 42, welche im Hochdruckbereich 18 mündet.

In einem weiteren Ausführungsbeispiel kann die kleine Hochdruckpumpe 14 als Anbau auf der großen Hochdruckpumpe 16 ausgeführt werden und über die große Hochdruckpumpe 16 angetrieben werden. Auf diese Weise entfällt eine mechanische Schnittstelle zum Antrieb der kleinen Hochdruckpumpe 14 am Motor.

## Patentansprüche

1. Kraftstofffördereinrichtung (1) für eine Kraftstoffeinspritzeinrichtung einer Brennkraftmaschine, eines Dual-Fuel-Motors, mit einer großen Hochdruckpumpe (16) und einer kleinen Hochdruckpumpe (14), welche parallel zueinander angeordnet sind, wobei durch die große Hochdruckpumpe (16) und durch die kleine Hochdruckpumpe (14) Kraftstoff aus einem Niederdruckbereich (13) in einen Hochdruckbereich (18) förderbar ist und die maximale Fördermenge der großen Hochdruckpumpe (16) um mindestens das Doppelte größer ist, als die maximale Fördermenge der kleinen Hochdruckpumpe (14), wobei der Hochdruckbereich (18) mit mindestens einem Injektor (21) verbunden ist, wobei eine Kontrolleinrichtung (30) vorgesehen ist, die ein Ventil ist, welches zwei Positionen aufweist, so dass in einer ersten Position eine Verbindung zwischen einer Druckseite der großen Hochdruckpumpe (16) und dem Hochdruckbereich (18) und eine Verbindung zwischen einer Druckseite der kleinen Hochdruckpumpe (14) und der Abströmleitung (15) freigegeben ist, und in einer zweiten Position eine Verbindung zwischen einer Druckseite der kleinen Hochdruckpumpe (14) und dem Hochdruckbereich (18) und eine Verbindung zwischen der Druckseite der großen Hochdruckpumpe (16) und der Abströmleitung (15) freigegeben ist, so dass die gesamte Fördermenge der großen Hochdruckpumpe (16) oder der kleinen Hochdruckpumpe (14) über eine Abströmleitung (15) in den Niederdruckbereich (13) absteuerbar ist.

2. Kraftstofffördereinrichtung (1) nach Anspruch 1 oder 2, **dadurch gekennzeichnet, dass** die Kontrolleinrichtung (30) ein 4/2-Wegeventil (33) ist.

3. Kraftstofffördereinrichtung (1) nach Anspruch 1 oder 2, **dadurch gekennzeichnet, dass** die Druckseite der große Hochdruckpumpe (16) über die Kontrolleinrichtung (30) entweder mit der Abströmleitung (15) oder dem Hochdruckbereich (18) verbunden ist.

4. Kraftstofffördereinrichtung (1) nach Anspruch 3, **dadurch gekennzeichnet, dass** die kleine Hochdruckpumpe (14) über eine Zündleitung (31) immer mit dem Hochdruckbereich (18) verbunden ist.

5. Kraftstofffördereinrichtung (1) nach einem der Ansprüche 3 oder 4, **dadurch gekennzeichnet, dass** die Kontrolleinrichtung (30) ein Spülventil (41) aufweist, welches in der Abströmleitung (15) angeordnet ist, wobei die Abströmleitung (15) zwischen einem Rückschlagventil (42) und der großen Hochdruckpumpe (16) in einer Hochdruckverbindung (19) angeordnet ist

6. Kraftstofffördereinrichtung (1) nach einem der vorherigen Ansprüche, **dadurch gekennzeichnet, dass** die kleine Hochdruckpumpe (14) mechanisch an die große Hochdruckpumpe (16) gekoppelt ist und über diese angetrieben werden kann.

7. Verfahren zur Förderung von Kraftstoff in einer Kraftstofffördereinrichtung (1) für eine Kraftstoffeinspritzeinrichtung einer Brennkraftmaschine, eines Dual-Fuel-Motors, nach einem der Ansprüche 1 bis 6, wobei bei einem Gasbetrieb der Kraftstofffördereinrichtung (1) die gesamte Fördermenge der große Hochdruckpumpe (16) in den Niederdruckbereich (13) gefördert wird. die große Hochdruckpumpe (16) und durch die kleine Hochdruckpumpe (14) Kraftstoff aus einem Niederdruckbereich (13) in einen Hochdruckbereich (18) gefördert wird, **dadurch gekennzeichnet, dass** bei einem Gasbetrieb der Kraftstofffördereinrichtung (1) die gesamte Fördermenge der große Hochdruckpumpe (16) in den Niederdruckbereich (13) gefördert wird.

## Claims

1. Fuel delivery device (1) for a fuel injection device of a combustion machine of a dual-fuel engine, having a large high-pressure pump (16) and a small high-pressure pump (14) which are arranged in parallel with respect to one another, wherein, by means of the large high-pressure pump (16) and by means of the small high-pressure pump (14), fuel can be delivered from a low-pressure region (13) into a high-pressure region (18), and the maximum delivery output of the large high-pressure pump (16) is at least twice the maximum delivery output of the small high-pressure pump (14), wherein the high-pressure region (18) is connected to at least one injector (21), wherein a control device (30) is provided which is a valve which has two positions, such that, in a first position, a connection between a pressure side of the large high-pressure pump (16) and the high-pressure region (18) and a connection between a pressure side of the small high-pressure pump (14) and the outflow line (15) are opened up, and in a second position, a connection between a pressure side of the small high-pressure pump (14) and the high-pressure region (18) and a connection between the pressure side of the large high-pressure pump (16) and the outflow line (15) are opened up, such that the entire delivery output of the large high-pressure pump (16) or of the small high-pressure pump (14) can be discharged via an outflow line (15) into the low-pressure region (13).

2. Fuel delivery device (1) according to Claim 1 or 2, **characterized in that** the control device (30) is a 4/2 directional valve (33).

3. Fuel delivery device (1) according to Claim 1 or 2, **characterized in that** the pressure side of the large high-pressure pump (16) is, by means of the control device (30), connected either to the outflow line (15) or to the high-pressure region (18).

4. Fuel delivery device (1) according to Claim 3, **characterized in that** the small high-pressure pump (14) is permanently connected to the high-pressure region (18) via an ignition line (31).

5. Fuel delivery device (1) according to either of Claims 3 and 4, **characterized in that** the control device (30) has a purge valve (41) which is arranged in the outflow line (15), wherein the outflow line (15) is arranged between a check valve (42) and the large high-pressure pump (16) in a high-pressure connection (19).

6. Fuel delivery device (1) according to any of the preceding claims, **characterized in that** the small high-pressure pump (14) is mechanically coupled to the large high-pressure pump (16) and can be driven by means of the latter.

7. Method for delivering fuel in a fuel delivery device (1) for a fuel injection device of a combustion machine of a dual-fuel engine according to any of Claims 1 to 6, wherein, in a gas operating mode of the fuel delivery device (1), the entire delivery output of the large high-pressure pump (16) is delivered into the low-pressure region (13).

## Revendications

1. Dispositif de refoulement de carburant (1) pour un dispositif d'injection de carburant d'un moteur à combustion interne, d'un moteur dual fuel, comprenant une grosse pompe haute pression (16) et une petite pompe haute pression (14) qui sont disposées parallèlement l'une à l'autre, du carburant pouvant être refoulé d'une zone basse pression (13) dans une zone haute pression (18) par la grosse pompe haute pression (16) et par la petite pompe haute pression (14) et la quantité maximale refoulée par la grosse pompe haute pression (16) étant au moins deux fois plus grande que la quantité maximale refoulée par la petite pompe haute pression (14), la zone haute pression (18) étant connectée à au moins un injecteur (21), un dispositif de commande (30) étant prévu, lequel est une soupape, qui présente deux positions de telle sorte que dans une première position, une connexion entre un côté pression de la grosse pompe haute pression (16) et la zone haute pression (18) et une connexion entre un côté pression de la petite pompe haute pression (14) et la conduite d'écoulement (15) soient libérées, et que dans une deuxième position, une connexion entre un côté pression de la petite pompe haute pression (14) et la zone haute pression (18) et une connexion entre le côté pression de la grosse pompe haute pression (16) et la conduite d'écoulement (15) soient libérées de telle sorte que la quantité totale refoulée par la grosse pompe haute pression (16) ou la petite pompe haute pression (14) puisse être coupée par le biais d'une conduite d'écoulement (15) dans la zone basse pression (13).

2. Dispositif de refoulement de carburant (1) selon la revendication 1 ou 2, **caractérisé en ce que** le dispositif de commande (30) est une soupape à 4/2 voies (33).

3. Dispositif de refoulement de carburant (1) selon la revendication 1 ou 2, **caractérisé en ce que** le côté pression de la grosse pompe haute pression (16) est connecté par le biais du dispositif de commande (30) soit à la conduite d'écoulement (15) soit à la zone haute pression (18).

4. Dispositif de refoulement de carburant (1) selon la revendication 3, **caractérisé en ce que** la petite pompe haute pression (14) est toujours connectée à la zone haute pression (18) par le biais d'une conduite d'allumage (31).

5. Dispositif de refoulement de carburant (1) selon l'une quelconque des revendications 3 et 4, **caractérisé en ce que** le dispositif de commande (30) présente une soupape de rinçage (41) qui est disposée dans la conduite d'écoulement (15), la conduite d'écoulement (15) étant disposée entre un clapet antiretour (42) et la grosse pompe haute pression (16) dans une connexion haute pression (19).

6. Dispositif de refoulement de carburant (1) selon l'une quelconque des revendications précédentes, **caractérisé en ce que** la petite pompe haute pression (14) est accouplée mécaniquement à la grosse pompe haute pression (16) et peut être entraînée par celle-ci.

7. Procédé de refoulement de carburant dans un dispositif de refoulement de carburant (1) pour un dispositif d'injection de carburant d'un moteur à combustion interne, d'un moteur dual-fuel, selon l'une quelconque des revendications 1 à 6, dans lequel, dans le cas d'un mode de fonctionnement à gaz du dispositif de refoulement de carburant (1), la quantité totale refoulée par la grosse pompe haute pression (16) est refoulée dans la zone basse pression (13).
